# EUROPÄISCHE PATENTANMELDUNG

(11) **EP 3 737 196 A1**
(43) Veröffentlichungstag der Anmeldung: **11.11.2020**
(21) Anmeldenummer: 19173567.9
(22) Anmeldetag: 09.05.2019
(51) Int. Cl.: H04W 76/10, H04W 76/00, H04L 29/08, H04W 84/18, H04W 84/20, H04W 4/70, H04W 4/80, H04W 12/00, B25F 5/00

(54) **VERFAHREN ZUM AUFBAU EINER KOMMUNIKATIONSVERBINDUNG ZWISCHEN AUSGEWÄHLTEN KOMPONENTEN EINES ARBEITS- UND KOMMUNIKATIONSSYSTEMS**

(71) Anmelder: Hilti Aktiengesellschaft, 9494 Schaan (LI)
(72) Erfinder: Balter, Marco, 6800 Feldkirch (AT); Schaefer, Martin, 6858 Schwarzach (AT)
(74) Vertreter: Hilti Aktiengesellschaft Corporate Intellectual Property

(57) **Zusammenfassung**

Die vorliegende Erfindung betrifft ein Verfahren zum Aufbau einer Kommunikationsverbindung zwischen ausgewählten Komponenten eines Arbeits- und Kommunikationssystems, wobei der Verbindungsaufbau zwischen den «richtigen» Kommunikationspartnern durch das Löschen eines Pairing-Gedächtnisses an einem Haupt-Werkzeuggerät ermöglicht wird, wobei diese Löschung des Pairing-Gedächtnisses durch Aktionen eines Hilfsgeräts Arbeits- und Kommunikationssystems initiiert wird. Dabei stellen das Hilfsgerät und ein ausgewähltes Haupt-Werkzeuggerät die «ausgewählten» Kommunikationspartner im Sinne der Erfindung dar.

## Beschreibung

Die vorliegende Erfindung betrifft ein Verfahren zum Aufbau einer Kommunikationsverbindung zwischen ausgewählten Komponenten eines Arbeits- und Kommunikationssystems, wobei der Verbindungsaufbau zwischen den «richtigen» Kommunikationspartnern durch das Löschen eines *Pairing*-Gedächtnisses an einem Haupt-Werkzeuggerät ermöglicht wird, wobei diese Löschung des *Pairing*-Gedächtnisses durch Aktionen eines Hilfsgeräts des Arbeits- und Kommunikationssystems initiiert wird. Dabei stellen das Hilfsgerät und ein ausgewähltes Haupt-Werkzeuggerät die «ausgewählten» Kommunikationspartner im Sinne der Erfindung dar.

Es sind aus dem täglichen Leben zahlreichen Beispiele dafür bekannt, dass technische Geräte untereinander kommunizieren können. Dabei kann es sich sowohl um mobile Geräte, wie Mobiltelefone oder Tablet-PCs, als auch stationäre Geräte, wie PCs oder Drucker, handeln. Beispielsweise kann ein Nutzer mit einem Smartphone einen Druckauftrag an einen Drucker schicken, der in einem anderen Raum innerhalb einer Wohnung steht. Darüber hinaus können beispielsweise Rollläden und/oder Heizungssysteme in einem Haus über ein Smartphone eingestellt oder gesteuert werden. Ferner können auch die Komponenten von mehrteiligen Überwachungsanlagen miteinander kommunizieren, zum Beispiel der Sender und der Empfänger einer Babyphone-Anlage.

Bei all diesen Kommunikationsverbindungen muss dafür Sorge getragen werden, dass nur diejenigen Komponenten eines Kommunikationssystems miteinander kommunizieren, die dafür bestimmt bzw. ausgewählt sind. Es ist beispielsweise nicht erwünscht, dass ein Hausbesitzer A die Heizungsanlage seines Nachbarn B mit seinem Smartphone steuern kann, wenn Nachbar B zufällig ein Steuer- und Kommunikationssystem desselben Anbieters verwendet. Genauso wenig möchten Eltern die Schlafgeräusche eines fremden Babies überwachen, das gegebenenfalls im Nachbarhaus oder in einem benachbarten Hotelzimmer schläft.

Um zu ermöglichen, dass im Rahmen eines Kommunikationssystems die "richtigen" Geräte bzw. Systemkomponenten miteinander kommunizieren und Daten und/oder Steuerbefehle austauschen, sind im Stand der Technik *Pairing*-Methoden entwickelt worden. Diese Pairing-Methoden werden beispielsweise auch im Baugewerbe bzw. auf Baustellen eingesetzt, um eine Kommunikation zwischen solchen Geräten zu ermöglichen, die sinnvollerweise für eine Kommunikation vorbestimmt sind. Dabei kann es sich beispielsweise um ein Haupt-Werkzeuggerät handeln, mit dem beispielsweise eine im Bereich einer Baustelle anfallende Arbeit erledigt werden kann. Insbesondere kann es sich dabei um eine Bohrmaschine, einen Winkel- oder Trennschleifer, ein Bohrgerät oder ein anderes Gerät handeln, mit dem ein Arbeitsbeitrag auf einer Baustelle geleistet werden kann. Das Haupt-Werkzeuggerät kann beispielsweise mit Hilfsgeräten zusammenarbeiten bzw. es kann die Anforderung bestehen, dass Informationen zwischen einem Haupt-Werkzeuggerät und einem oder mehreren Hilfsgeräten ausgetauscht werden. Bei einem Hilfsgerät kann es sich beispielsweise um eine Baustellenlampe, ein Baustellenradio, einen Staubsauger, eine automatische Antriebsvorrichtung, ein Wassermanagementsystem oder viele anderen mögliche Hilfsgeräte handeln, ohne darauf beschränkt zu sein.

Es kann beispielsweise auf einer Baustelle vorkommen, dass ein Hilfsgerät mit mehreren Haupt-Werkzeuggeräten *gepairt* wurde. Das bedeutet, dass das Hilfsgerät dafür eingerichtet wurde, mit mehreren verschiedenen Haupt-Werkzeuggeräten zusammenzuwirken und Informationen, Daten und/oder Steuerbefehle auszutauschen. Dies kann beispielsweise werkseitig vom Hersteller des Hilfsgeräts so vorgesehen sein oder sich im Laufe der Lebenszeit des Hilfsgerät ergeben, wenn das Hilfsgerät im Laufe seiner vorzugsweise mehrjährigen Verwendung mit unterschiedlichen Haupt-Werkzeuggeräten zusammen verwendet wurde. Ein häufiger Nachteil von konventionellen Arbeitssystemen aus Haupt-Werkzeuggeräten und Hilfsgeräten, die aus dem Stand der Technik bekannt sind, besteht darin, dass die Hilfsgeräte oft nicht wissen, mit welchem Haupt-Werkzeuggerät sie *gepairt* wurden bzw. mit welchem Haupt-Werkzeuggerät sie in der aktuellen Situation zusammenarbeiten sollen. Dieses Unwissen kann beispielsweise darauf zurückzuführen sein, dass die Hilfsgeräte nicht über ein *Pairing*-Gedächtnis verfügen, das ihnen gegebenenfalls ermöglichen würde, den "richtigen", d.h. dazu vorgesehenen Kommunikationspartner auf der Baustelle zu finden.

Wenn sich beispielsweise auf einer Baustelle mehrere Haupt-Werkzeuggeräte befinden, die mit einem Hilfsgerät *gepairt* wurden und sich mehrere dieser Haupt-Werkzeuggeräte auf derselben Baustelle in der Reichweite einer *wireless* Kommunikationsverbindung befinden, kann eine sinnvolle Kommunikationsverbindung zwischen zwei bestimmten, d.h. dafür vorgesehen und ausgewählten Komponenten eines Arbeits- und Kommunikationssystems oft nicht gewährleistet werden. In vielen Fällen wird es in dem geschilderten Beispiel dazu kommen, dass sich dasjenige Haupt-Werkzeuggerät mit dem Hilfsgerät verbindet, das den schnellsten Verbindungsaufbau gewährleisten kann. Dies ist aber in vielen Fällen nicht das Haupt-Werkzeuggerät, mit dem eine Verbindung des Hilfsgeräts gewünscht ist.

Es ist im Stand der Technik vorgeschlagen worden, eine nicht zielgerichtete Kommunikation zwischen Geräten, die nicht miteinander kommunizieren sollen, dadurch zu unterbinden, dass die *wireless* Kommunikationsverbindung an allen Haupt-Werkzeuggeräten eines Arbeits- und Kommunikationssystems, außer an dem ausgewählten Haupt-Werkzeuggerät, abgeschaltet wird. Allerdings kann dies zu Problemen führen, wenn sich die Haupt-Werkzeuggeräte, an denen die *wireless* Kommunikationsverbindung deaktiviert werden soll, zwar in der Reichweite der *wireless* Kommunikationsverbindung befinden, aber kein Sichtkontakt zum Hilfsgerät besteht. Dadurch kann die Deaktivierung nur schwer vorgenommen werden, weil der Nutzer gegebenenfalls überhaupt nicht weiß, wie viele Haupt-Werkzeuggeräte auf der Baustelle vorhanden sind und wo genau ihr Aufenthaltsort ist. Um sicherzustellen, dass die *wireless* Kommunikationsverbindung an allen Haupt-Werkzeuggeräten, außer dem ausgewählten Haupt-Werkzeuggerät, ausgeschaltet ist, kann unter Umständen eine zeitaufwändige Suche der entsprechenden Geräte erforderlich sein, die gegebenenfalls eine große Arbeitskapazität binden kann. Somit stellt die Deaktivierung der *wireless* Kommunikationsverbindung an allen Haupt-Werkzeuggeräten eines Arbeits- und Kommunikationssystems, außer an dem ausgewählten Haupt-Werkzeuggerät, keine alltags- und baustellentaugliche Lösung des Problems dar.

Das Ausschalten der *wireless* Kommunikationsverbindung an allen Haupt-Werkzeuggeräten außer an dem ausgewählten Haupt-Werkzeuggerät, ist auch deswegen nachteilig, wenn gegebenenfalls ein zweites Hilfsgerät drahtlos mit einem der weiteren Haupt-Werkzeuggeräte verbunden werden soll. Dies kann beispielsweise der Fall sein, wenn in dem Arbeits- und Kommunikationssystem ein zweites Kernbohrgerät als Haupt-Werkzeuggerät mit einer automatischen Vorschubeinrichtung als Hilfsgerät betrieben wird, wobei das zweite Kernbohrgerät und die automatische Vorschubeinrichtung drahtlos zusammenarbeiten, insbesondere unter Ausnutzung einer *wireless* Kommunikationsverbindung. In diesem Fall wäre das Ausschalten der Kommunikationsverbindung an dem weiteren Haupt-Werkzeuggerät nicht möglich, ohne auch die Kommunikationsverbindung zwischen den weiteren Haupt-Werkzeuggerät und dem zweiten Hilfsgerät zu beenden.

Die Aufgabe, die der vorliegenden Erfindung zugrunde liegt, besteht demnach darin, die vorstehend beschriebenen Nachteile des Standes der Technik zu überwinden und ein Verfahren zum Aufbau einer Kommunikationsverbindung zwischen dafür vorgesehenen Komponenten eines Arbeits- und Kommunikationssystems anzugeben, bei dem sich ein dafür vorgesehenes Haupt-Werkzeuggerät mit einem dafür vorgesehen Hilfsgerät verbindet, um Informationen, Daten und/oder Steuerbefehle innerhalb des Arbeits- und Kommunikationssystems auszutauschen.

Die Aufgabe wird gelöst durch den Gegenstand des unabhängigen Anspruchs. Vorteilhafte Ausführungsformen zu dem Gegenstand es unabhängigen Anspruchs 1 finden sich in den abhängigen Ansprüchen.

### Beschreibung der Erfindung:

Erfindungsgemäß ist ein Verfahren zum Aufbau einer Kommunikationsverbindung zwischen ausgewählten Komponenten eines Arbeits- und Kommunikationssystems vorgesehen, das die folgenden Schritte umfasst:
a) Bereitstellung einer ersten Kommunikationsverbindung zwischen mindestens einem Haupt-Werkzeuggerät und einem Hilfsgerät des Arbeits- und Kommunikationssystems,
b) Deaktivierung der ersten Kommunikationsverbindung an dem Hilfsgerät durch einen Nutzer,
c) Versand eines Steuerbefehls zum Löschen eines *Pairing*-Gedächtnisses des Haupt-Werkzeuggeräts durch das Hilfsgerät an das Haupt-Werkzeuggerät,
d) Löschen des Hilfsgeräts aus dem *Pairing*-Gedächtnis des Haupt-Werkzeuggeräts,
e) Unterbrechung der ersten Kommunikationsverbindung
f) Aufbau einer zweiten Kommunikationsverbindung zwischen dem Hilfsgerät und dem ausgewählten Haupt-Werkzeuggerät.

Es ist im Sinne der Erfindung bevorzugt, dass das Arbeits- und Kommunikationssystem mindestens ein ausgewähltes Haupt-Werkzeuggerät und ein weiteres Haupt-Werkzeuggerät, sowie ein Hilfsgerät umfasst. Das Arbeits- und Kommunikationssystem stellt vorzugsweise eine Gruppe von Geräten auf einer Baustelle dar, mit denen eine Arbeit oder ein Arbeitsprozess bearbeitet wird. Dabei kann es sich zum Beispiel um ein oder mehrere Kernbohrgeräte handeln, mit denen Löcher oder Durchgänge in Wände oder Mauerwerk gebohrt werden sollen. Diese Kernbohrgeräte können vorzugsweise Haupt-Werkzeuge im Sinne der Erfindung darstellen. Die Kernbohrgeräte können mit Hilfsgeräten zusammenarbeiten oder zusammenwirken, die zum Beispiel zusätzliche Funktionalitäten für die Durchführung des Arbeitsprozesses bereitstellen. Beispielsweise können Wassermanagementgeräte Wasser zum Kühlen der Bohrkrone bereitstellen und verbrauchtes oder verunreinigtes Wasser absaugen und für eine weitere Verwendung aufbereiten. Solch ein Wassermanagementgerät kann beispielsweise ein Hilfsgerät im Sinne der Erfindung darstellen.

Bei dem ausgewählten Haupt-Werkzeuggerät handelt es sich vorzugsweise um dasjenige Haupt-Werkzeuggerät mit dem das Hilfsgerät kommunizieren soll, um Informationen, Daten und/oder Steuerbefehle auszutauschen. Wenn das Hilfsgerät beispielsweise ein Wassermanagementsystem zur Bereitstellung von Wasser für eine Kernbohrgerät ist, kann das ausgewählte Haupt-Werkzeug das entsprechende Kernbohrgerät sein, das gerade auf der Baustelle eingesetzt werden soll und mit dem das Wassermanagementsystem durch eine Schlauchverbindung verbunden sein kann. Das weitere Haupt-Werkzeuggerät kann beispielsweise ein anderes Kernbohrgerät sein, das sich beispielsweise ebenfalls auf derselben Baustelle in Reichweite einer *wireless* Kommunikationsverbindung des Hilfsgeräts befindet, das aber gerade nicht in Betrieb ist und mit dem keine Schlauchverbindung besteht. Vorzugsweise soll das Hilfsgerät mit diesem weiteren Haupt-Werkzeuggerät nicht kommunizieren, sondern mit dem ausgewählten Haupt-Werkzeuggerät.

Es ist im Sinne der Erfindung bevorzugt, dass zunächst eine erste Kommunikationsverbindung zwischen dem einen Hilfsgerät und dem ausgewählten Haupt-Werkzeuggerät des Arbeits- und Kommunikationssystems besteht. Es ist im Sinne der Erfindung insbesondere bevorzugt, dass die Kommunikationsverbindung als *wireless* Kommunikationsverbindung ausgestaltet ist. Mit anderen Worten handelt es sich insbesondere um eine drahtlose Kommunikationsverbindung.

Es ist im Sinne der Erfindung bevorzugt, dass zunächst eine Kommunikationsverbindung zwischen einem Haupt-Werkzeuggerät und einem Hilfsgerät des Arbeits- und Kommunikationssystems besteht, wobei diese Kommunikationsverbindung zwischen einem beliebigen Haupt-Werkzeuggerät und dem Hilfsgerät des Arbeits- und Kommunikationssystems vorzugsweise als erste Kommunikationsverbindung bezeichnet wird. Mit anderen Worten ist es im Sinne der Erfindung bevorzugt, dass am Anfang des vorgeschlagenen Verfahrens eine erste Kommunikationsverbindung zwischen dem Hilfsgerät und einem beliebigen Haupt-Werkzeuggerät des Arbeits- und Kommunikationssystems besteht. Es ist im Sinne der Erfindung bevorzugt, dass das Hilfsgerät zu einem bestimmten Zeitpunkt mittels der Kommunikationsverbindung mit genau einem bestimmten Haupt-Werkzeuggerät verbunden vorliegt. Allerdings kann das Hilfsgerät zu diesem Zeitpunkt mit mehreren Haupt-Werkzeuggeräten *gepairt* sein. Mit anderen Worten kann es im Sinne der Erfindung bevorzugt sein, dass ein *Pairing* vorzugsweise gleichzeitig mit mehreren Haupt-Werkzeug-geräten besteht.

Es ist im Sinne der Erfindung bevorzugt, dass es sich bei der *wireless* Kommunikationsverbindung um eine vorzugsweise drahtlos ausgestaltete Kommunikationsverbindung handelt. Insbesondere kann die Kommunikationsverbindung ausgewählt sein aus einer Gruppe umfassend Bluetooth, insbesondere Low Energy Bluetooth, RFID, NFC, Wifi, Zigbee, Wibree, WiMAX, Lo-RA, IrDA oder anderen vorzugsweise proprietären Kommunikationsverbindungen.

Es ist im Kontext der Erfindung vorgesehen, dass das Hilfsgerät einen Steuerbefehl zum Löschen des *Pairing*-Gedächtnisses des Haupt-Werkzeuggeräts an das Haupt-Werkzeuggerät versendet. Es ist im Sinne der Erfindung ganz besonders bevorzugt, dass der Versand des Steuerbefehls erfolgt, bevor die erste Kommunikationsverbindung unterbrochen bzw. deaktiviert wird. Es ist im Sinne der Erfindung insbesondere bevorzugt, dass der Löschungsbefehl an dasjenige Haupt-Werkzeuggerät versendet wird, mit dem das Hilfsgerät verbunden vorliegt.

Es ist im Kontext der Erfindung vorgesehen, dass die erste Kommunikationsverbindung an dem Hilfsgerät deaktiviert wird, nachdem ein Steuerbefehl zum Löschen des *Pairing*-Gedächtnisses des Haupt-Werkzeuggeräts versendet wurde. Vorzugsweise erfolgt dieser Versand vom Hilfsgerät an das Haupt-Werkzeuggerät. Es ist im Sinne der Erfindung bevorzugt, dass ein Nutzer des Systems aus Haupt-Werkzeuggerät und Hilfsgerät die erste Kommunikationsverbindung am Hilfsgerät ausschaltet. Dazu kann das Hilfsgerät eine Schaltvorrichtung, wie einen Schalter oder eine Taste, aufweisen. Vorzugsweise kann die erste Kommunikationsverbindung als Bluetooth-Verbindung ausgestaltet sein, wobei insbesondere eine Low Energy Bluetooth-Verbindung bevorzugt ist. Es ist im Sinne der Erfindung bevorzugt, dass das Hilfsgerät den "*Pairing*-Speicher-Löschbefehl" an das Haupt-Werkzeuggerät zwischen der Deaktivierung der ersten Kommunikationsverbindung durch den Nutzer und dem tatsächlichen Abschalten der ersten Kommunikationsverbindung durch das Hilfsgerät versendet. Vorzugsweise löscht daraufhin das Haupt-Werkzeuggerät das Hilfsgerät aus seinem *Pairing*-Speicher.

Nach dem Löschen des Hilfsgeräts aus dem *Pairing*-Gedächtnis des Haupt-Werkzeuggeräts wird vorzugsweise eine neue Kommunikationsverbindung zwischen dem Haupt-Werkzeuggerät und dem Hilfsgerät hergestellt. Diese neue Kommunikationsverbindung wird bevorzugt als zweite Kommunikationsverbindung bezeichnet. Zum Aktivieren der zweiten Kommunikationsverbindung kann der Nutzer beispielsweise eine Schaltvorrichtung am Hilfsgerät betätigen. Mit anderen Worten kann die zweite Kommunikationsverbindung durch eine Betätigung einer Taste oder eines Schalters am Hilfsgerät des Arbeits- und Kommunikationssystems hergestellt werden. Beispielsweise kann durch die Betätigung der Schaltvorrichtung eine Bluetooth-Kommunikationsverbindung als zweite Kommunikationsvorrichtung erzeugt werden. Sobald die zweite Kommunikationsverbindung am Hilfsgerät aktiviert ist, kann das Hilfsgerät nach einem Haupt-Werkzeuggerät suchen, wobei es sich bei diesem Haupt-Werkzeuggerät vorzugsweise um das ausgewählte Haupt-Werkzeuggerät handelt. Dabei kann es sich insbesondere um das nächste Haupt-Werkzeuggerät handeln, mit dem das Hilfsgerät *gepairt* ist. Vorzugsweise verbindet sich das Hilfsgerät mit dem so aufgefundenen ausgewählten Haupt-Werkzeuggerät. Wenn sich mehrere Haupt-Werkzeuggerät auf einer Baustelle befinden, mit denen das Hilfsgerät zu einem früheren Zeitpunkt *gepairt* wurde, können vorteilhafterweise alle oder einzelne Schritte des Verfahrens wiederholt werden, bis eine Verbindung zwischen dem Hilfsgerät und dem ausgewählten Haupt-Werkzeuggerät erstellt wurde.

Durch den Aufbau der zweiten Kommunikationsverbindung zwischen dem Hilfsgerät und dem ausgewählten Haupt-Werkzeuggerät wird vorteilhafterweise erreicht, dass diese im Sinne der Erfindung als «ausgewählte Komponenten» bezeichneten Bestandteile des Arbeits- und Kommunikationssystems miteinander kommunizieren können, beispielsweise um das Arbeitsergebnis zu verbessern oder um die Arbeit des Haupt-Werkzeuggeräts um Funktionalitäten des Hilfsgeräts zu erweitern. Das ausgewählte Haupt-Werkzeuggerät und das weitere Haupt-Werkzeuggerät können sich beispielsweise durch ihre Leistungsparameter oder die Durchmesser der zu bohrenden Kerne unterscheiden. Es kann aber auch bevorzugt sein, dass es sich um im Wesentlichen ähnliche bzw. gleichartige Geräte handelt.

Es stellt einen besonderen Vorteil des vorgeschlagenen Verfahrens dar, dass der Kommunikationsverbindungsaufbau zwischen den ausgewählten Komponenten des Arbeits- und Kommunikationssystems durch das Hilfsgerät und Handlungen, die von dem Hilfsgerät ausgehen, erreicht werden kann. Dadurch müssen vorteilhafterweise keine Maßnahmen an einem der Haupt-Werkzeuggeräte des Systems vorgenommen werden, sondern ausreichend für die erfolgreiche Durchführung des Verfahrens ist ein Zugriff auf das Hilfsgerät.

Es ist im Sinne der Erfindung bevorzugt, dass das Haupt-Werkzeuggerät in dem *Pairing-*Gedächtnis diejenigen Hilfsgeräte abspeichert, mit denen es bereits *gepairt* wurde. Indem das *Pairing*-Gedächtnis gelöscht wird bzw. indem das Hilfsgerät, das den Löschungsbefehl gesendet hat, aus dem *Pairing*-Gedächtnis gelöscht wird, wird vorteilhafterweise erreicht, dass sich das Hilfsgerät nicht mehr automatisch mit dem sich am schnellsten verbindenden Haupt-Werkzeuggerät verbindet, sondern dass sich eine Kommunikationsverbindung grundsätzlich mit allen Haupt-Werkzeuggeräten des Arbeits- und Kommunikationssystems ausbilden kann. Insbesondere wird dadurch eine Verbindung mit dem ausgewählten Haupt-Werkzeuggerät ermöglicht, mit dem eine Kommunikationsverbindung und eine Zusammenarbeit gewünscht ist. Diese Verbindung wird im Sinne der Erfindung bevorzugt als zweite Kommunikationsverbindung bezeichnet.

Nach erfolgter Übertragung des Löschungsbefehls vom Hilfsgerät an das Haupt-Werkzeuggerät wird auf dem Haupt-Werkzeuggerät, das den Löschungsbefehl erhalten hat, das *Pairing-*Gedächtnis gelöscht. Der Begriff «Löschung des *Pairing*-Gedächtnisses» kann beispielsweise bedeuten, dass das *Pairing*-Gedächtnis des ausgewählten Haupt-Werkzeuggeräts vollständig gelöscht wird. Ferner kann der Begriff so verstanden werden, dass das Hilfsgerät, das den Löschungsbefehl gesendet hat, aus dem *Pairing*-Gedächtnis des ausgewählten Haupt-Werkzeuggeräts des Arbeits- und Kommunikationssystems gelöscht wird. Es ist im Sinne der Erfindung bevorzugt, dass das Haupt-Werkzeuggerät, das den Löschungsbefehlt erhält, dazu in der Lage ist, diesen Steuerbefehl automatisch und selbsttätig umzusetzen.

Nach der Löschung des *Pairing*-Gedächtnisses des Haupt-Werkzeugs kann vorteilhafterweise eine neue Kommunikationsverbindung zwischen dem Hilfsgerät und dem ausgewählten Haupt-Werkzeuggerät aufgebaut werden. Diese neue Kommunikationsverbindung wird im Sinne der Erfindung bevorzugt als zweite Kommunikationsverbindung bezeichnet. Vorzugsweise kann das ausgewählte Haupt-Werkzeuggerät dasjenige Werkzeuggerät sein, mit dem eine besonders schnelle Verbindung zum Hilfsgerät ausgebildet werden kann. Es können jedoch auch andere Auswahlkriterien herangezogen werden, um das ausgewählte Haupt-Werkzeuggerät zu bestimmen.

Es ist im Sinne der Erfindung bevorzugt, dass das Hilfsgerät im Kontext der vorliegenden Erfindung verschiedene Zustandssignale abgeben kann. Vorzugsweise können solche Zustandssignale verwendet werden, um einen Zustand des Hilfsgeräts zu beschreiben. Insbesondere kann es sich um informationstechnologische Signale handeln. Beispielsweise können die Zustandssignale den Aufbau oder Status einer Kommunikationsverbindung beschreiben. Das Hilfsgerät kann beispielsweise signalisieren, dass es im Arbeits- und Kommunikationssystem vorhanden und/oder aktiviert vorliegt. Dieses Signal kann beispielsweise als "Bin da"-Signal bezeichnet werden. In diesem Fall kann das Haupt-Werkzeuggerät eine zweite Kommunikationsverbindung aufbauen, wenn das Haupt-Werkzeuggerät das Hilfsgerät in seinem *Pairing*-Speicher abgespeichert hat. Vorzugsweise ist das Hilfsgerät nicht dazu eingerichtet, zu entscheiden, mit welchem Haupt-Werkzeuggerät eine Kommunikationsverbindung aufgebaut wird. Es ist im Sinne der Erfindung ganz besonders bevorzugt, dass das Haupt-Werkzeuggerät über einen *Pairing*-Speicher verfügt, während das Hilfsgerät vorzugsweise nicht über ein *Pairing*-Gedächtnis verfügt.

Alternativ kann das Hilfsgerät ein "Bin da und eine Deaktivierung der ersten Kommunikationsverbindung hat stattgefunden"-Signal als weiteres mögliches Zustandssignal abgeben. Dieses Signal kann in einem Ausführungsbeispiel der Erfindung auch ein "Bin da und eine Deaktivierungs-Taste am Hilfsgerät wurde betätigt"-Signal darstellen. Wenn in diesem Fall ein Haupt-Werkzeuggerät ein Hilfsgerät sucht, werden insbesondere solche Hilfsgeräte gesucht, die ein solches zweites Zustandssignal abgeben. Es ist im Kontext des vorgeschlagenen Verfahrens bevorzugt, dass daraufhin der Aufbau einer Verbindung automatisch erfolgt. Es ist insbesondere bevorzugt, dass sich eine zweite Kommunikationsverbindung zwischen dem Hilfsgerät und dem ausgewählten Haupt-Werkzeuggerät aufbaut

Diese zweite Kommunikationsverbindung kann vorteilhafterweise unabhängig von früheren Kommunikationsverbindungen, die gegebenenfalls zwischen Komponenten des Arbeits- und Kommunikationssystems bestanden, aufgebaut werden. Insbesondere wird durch das vorgeschlagene Verfahren ein Verbindungsaufbau zwischen den «richtigen» Kommunikationspartners ermöglicht, d.h. beispielsweise zwischen dem Kernbohrgerät und einem Wassermanagementsystem, mit dem es über eine Schlauchverbindung verbunden ist, um Wasser vom Wassermanagementsystem zum Kernbohrgerät zu leiten und verbrauchtes bzw. Schmutzwasser vom Kernbohrgerät zurück zum Wassermanagementsystem. Dadurch wird eine sinnvolle, ziel- und zweckgerichtete Kommunikation von unterschiedlichen Geräten auf einer Baustelle gefördert und ein digitales Kommunikationsdurcheinander zwischen solchen Geräten, die nicht miteinander kommunizieren oder zusammenarbeiten sollen, wirksam vermieden.

Die Erfindung soll im Folgenden in einem Ausführungsbeispiel beschrieben werden: Dabei ist das Hilfsgerät zunächst mit einem Haupt-Werkzeuggerät verbunden. Allerdings soll das Hilfsgerät vorzugsweise mit einem anderen Haupt-Werkzeuggerät verbunden werden. Die bestehende Verbindung zwischen dem Hilfsgerät und dem Haupt-Werkzeuggerät wird vorzugsweise als erste Kommunikationsverbindung bezeichnet; die aufzubauende Kommunikationsverbindung zwischen dem Hilfsgerät und dem ausgewählten Haupt-Werkzeuggerät als zweite Kommunikationsverbindung. Ein Nutzer betätigt einen Schalter am Hilfsgerät, woraufhin das Hilfsgerät einen Steuerbefehl an das Haupt-Werkzeuggerät sendet, mit dem es mittels der ersten Kommunikationsverbindung verbunden vorliegt. Dieser Befehl umfasst die Aufforderung an das Haupt-Werkzeuggerät, die erste Kommunikationsverbindung zu trennen und den Gedächtnisspeicher zu löschen. Das Hilfsgerät kann nun beispielsweise in einen *broadcasting mode* wechseln und an die Haupt-Werkzeuggerät in einem vorbestimmten Umkreis ein Zustandssignal senden. Dabei kann es sich beispielsweise um ein zweites Zustandssignal handeln, das vorzugsweise mit der Aufforderung an die Haupt-Werkzeuge verbunden sein kann, dass die Haupt-Werkzeuggeräte des Arbeits- und Kommunikationssystems ihre *Pairing*-Speicher löschen sollen. Der vorbestimmte Umkreis wird im Sinne der Erfindung vorzugsweise auch als Range bezeichnet. In dem hier beschriebenen Ausführungsbeispiel der Erfindung kann dann von einem Nutzer ein Schalter an dem Haupt-Werkzeuggerät betätigt werden, mit dem das Hilfsgerät verbunden werden soll. Dabei handelt es sich vorzugsweise um das ausgewählte Haupt-Werkzeuggerät. Nach der Betätigung des Schalters am ausgewählten Haupt-Werkzeuggerät wird dann das ausgewählte Haupt-Werkzeuggerät mit dem neuen Hilfsgerät verbunden, wobei hierfür eine zweite Kommunikationsverbindung verwendet wird. Das Haupt-Werkzeuggerät speichert dann das Hilfsgerät in seinem *Pairing*-Gedächtnis.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:

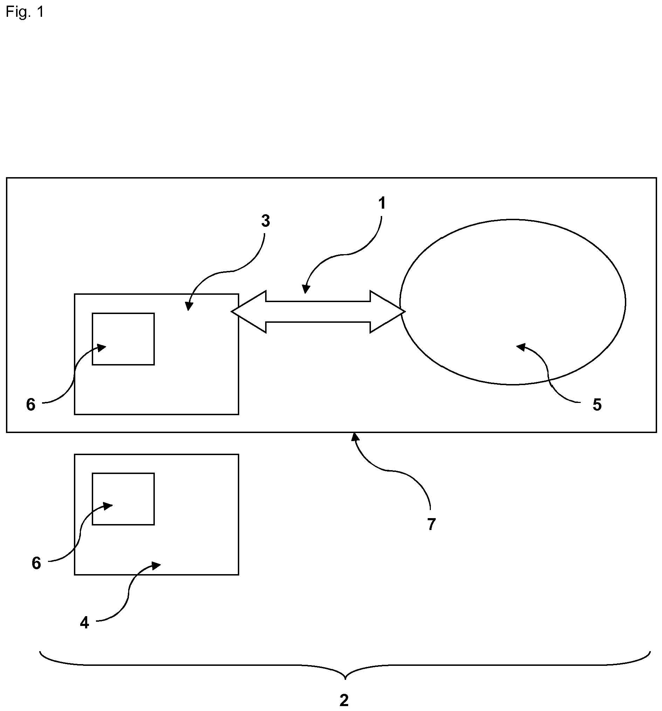

- Fig. 1: Ansicht einer bevorzugten Ausgestaltung der Erfindung

### Ausführungsbeispiele:

Figur 1 zeigt eine bevorzugte Ausgestaltung eines vorgeschlagenen Verfahrens zum Aufbau einer Kommunikationsverbindung (1) zwischen ausgewählten Komponenten (3, 5) eines Arbeits- und Kommunikationssystems (2). Das Arbeits- und Kommunikationssystem (2) umfasst vorzugsweise mindestens ein ausgewähltes Haupt-Werkzeuggerät (3), ein weiteres Haupt-Werkzeuggerät (4) und ein Hilfsgerät (5). Bei dem ausgewählten Haupt-Werkzeuggerät (3) handelt es sich vorzugsweise um dasjenige technische Gerät, mit dem das Hilfsgerät (5) zusammenarbeiten bzw. kommunizieren soll. Zwischen diesen ausgewählten Komponenten kann beispielsweise eine Verbindung von Schlauch- und/oder Leitungsmitteln bestehen, insbesondere dann, wenn das ausgewählte Haupt-Werkzeuggerät (3) ein Kernbohrgerät und das Hilfsgerät (5) ein Wassermanagementsystem zur Bereitstellung einer Wasserversorgung für das Kernbohrgerät darstellt. Vorzugsweise bilden das ausgewählte Haupt-Werkzeuggerät (3), das Hilfsgerät (5) und die Kommunikationsverbindung (1) das «ausgewählte Kommunikationssystem (7)». Bei dem weiteren Haupt-Werkzeuggerät (4) handelt es sich vorzugsweise um ein technisches Gerät, das auch auf der Baustelle vorhanden ist, sich in der Reichweite einer vorzugsweise drahtlosen Kommunikationsvorrichtung (2) aufhält, mit dem das Hilfsgerät (5) aber nicht kommunizieren soll. Die Haupt-Werkzeuge (3, 4) weisen jeweils ein *Pairing*-Gedächtnis (6) auf, in dem beispielsweise hinterlegt bzw. gespeichert sein kann, mit welchen Hilfsgeräten (5) das jeweilige Haupt-Werkzeuggerät (3, 4) bereits zusammengearbeitet hat bzw. mit welchen Hilfsgeräten (5) das jeweilige Haupt-Werkzeuggerät (3, 4) *gepairt* ist. Bei der Kommunikationsverbindung (1), die vor Durchführung des vorgeschlagenen Verfahrens zwischen dem Hilfsgerät (5) und dem Haupt-Werkzeuggerät (3 oder 4) vorliegt, handelt es sich vorzugsweise um eine erste Kommunikationsverbindung (1a).

Die in Figur 1 dargestellte Situation entspricht vorzugsweise der Situation nach Durchführung des vorgeschlagenen Verfahrens. In Figur 1 besteht eine Kommunikationsverbindung (1) zwischen dem ausgewählten Haupt-Werkzeug (3) und dem Hilfsgerät (5). Dabei handelt es sich vorzugsweise um eine zweite Kommunikationsverbindung (1b). Diese ausgewählte Kommunikationsverbindung (7, 1b) kann insbesondere dadurch erzeugt werden, dass zuvor die *Pairing-*Gedächtnisse (6) der Haupt-Werkzeuge (3, 4) des Arbeits- und Kommunikationssystems (2) nach einem entsprechenden Steuerbefehl zur Löschung der *Pairing*-Gedächtnisse (6) durch das Hilfsgerät (5) gelöscht wurden. Dadurch wird es vorteilhafterweise möglich, dass sich das Hilfsgerät (5) nicht automatisch mit dem Haupt-Werkzeug (3, 4) verbindet, das den schnellsten Verbindungsaufbau anbietet, sondern mit demjenigen Haupt-Werkzeug (3), mit dem der Aufbau einer Kommunikationsverbindung (1b, 7) erwünscht ist.

### Bezugszeichenliste

- 1: Kommunikationsverbindung 1a erste Kommunikationsverbindung 1b zweite Kommunikationsverbindung
- 2: Arbeits- und Kommunikationssystem
- 3: ausgewähltes Haupt-Werkzeuggerät
- 4: weiteres Haupt-Werkzeuggerät
- 5: Hilfsgerät
- 6: *Pairing*-Gedächtnis
- 7: ausgewähltes Kommunikationssystem bzw. ausgewählte Kommunikationsverbindung zwischen dem ausgewähltem Haupt-Werkzeuggerät und dem Hilfsgerät

## Patentansprüche

1. Verfahren zum Aufbau einer Kommunikationsverbindung (1) zwischen ausgewählten Komponenten eines Arbeits- und Kommunikationssystems (2),
**umfassend die folgenden Schritte:**
a) Bereitstellung einer ersten Kommunikationsverbindung (1a) zwischen mindestens einem Haupt-Werkzeuggerät (3 oder 4) und einem Hilfsgerät (5) des Arbeits- und Kommunikationssystems (2),
b) Deaktivierung der ersten Kommunikationsverbindung (1a) an dem Hilfsgerät (5) durch einen Nutzer,
c) Versand eines Steuerbefehls zum Löschen eines *Pairing*-Gedächtnisses (6) des Haupt-Werkzeuggeräts (3 oder 4) durch das Hilfsgerät (5) an das Haupt-Werkzeuggerät (3 oder 4),
c) Löschen des Hilfsgeräts (5) aus dem *Pairing*-Gedächtnis (6) des Haupt-Werkzeuggeräts (3 oder 4),
d) Unterbrechung der ersten Kommunikationsverbindung (1a),
e) Aufbau einer zweiten Kommunikationsverbindung (1b) zwischen dem Hilfsgerät (5) und dem ausgewählten Haupt-Werkzeuggerät (3 oder 4).

2. Verfahren nach Anspruch 1
**dadurch gekennzeichnet, dass**
das Arbeits- und Kommunikationssystem (2) mindestens ein ausgewähltes Haupt-Werkzeuggerät (3) und ein weiteres Haupt-Werkzeuggerät (4), sowie ein Hilfsgerät (5) umfasst.

3. Verfahren nach Anspruch 1 oder 2
**dadurch gekennzeichnet, dass**
die Kommunikationsverbindung (1) als *wireless* Kommunikationsverbindung ausgestaltet ist.

4. Verfahren nach einem der vorhergehenden Ansprüche
**dadurch gekennzeichnet, dass**
die erste Kommunikationsverbindung (1a) zwischen dem Hilfsgerät (5) und dem weiteren Haupt-Werkzeuggerät (4) oder dem ausgewählten Haupt-Werkzeuggerät (3) gebildet wird.

5. Verfahren nach einem der vorhergehenden Ansprüche
**dadurch gekennzeichnet, dass**
die erste Kommunikationsverbindung (1a) zwischen dem Hilfsgerät (5) und dem ausgewählten Haupt-Werkzeuggerät (3) gebildet wird.

6. Verfahren nach einem der vorhergehenden Ansprüche
**dadurch gekennzeichnet, dass**
das Hilfsgerät (5) Signale abgibt, die einen Zustand des Hilfsgeräts (5) beschreiben.

7. Verfahren nach Anspruch 6
**dadurch gekennzeichnet, dass**
die Zustandssignale in einem *broadcast mode* gesendet werden.

8. Verfahren nach einem der vorhergehenden Ansprüche
**dadurch gekennzeichnet, dass**
die Haupt-Werkzeuggeräte (3, 4) *Pairing*-Gedächtnisse (6) umfassen, während das Hilfsgerät (5) kein *Pairing*-Gedächtnis (6) umfasst.
